# EUROPEAN PATENT SPECIFICATION

(11) **EP 1 592 207 B1**
(45) Date of publication and mention of the grant of the patent: **25.07.2007**
(21) Application number: 05009123.0
(22) Date of filing: 26.04.2005
(51) Int. Cl.: H04L 29/08

(54) **Data delivery device**
Datenlieferungseinrichtung
Appareil de délivrance des données

(30) Priority: 27.04.2004 JP 2004131867
(43) Date of publication of application: 02.11.2005
(73) Proprietor: NTT DoCoMo, Inc., Tokyo 100-6150 (JP)
(72) Inventor: Nasu, Kazunori, Int. Prop. Dpt., NTT DoCoMo, Inc., Chiyoda-ku, Tokyo 100-6150 (JP); Hosokawa, Atsushi, Int.Prop.Dpt., NTT DoCoMo, Inc., Chiyoda-ku, Tokyo 100-6150 (JP); Takeichi, Masato, Int.Prop.Dpt., NTT DoCoMo, Inc., Chiyoda-ku, Tokyo 100-6150 (JP)
(74) Representative: Grosse, Wolfgang

(56) References cited:
- US-A1- 2003 131 129
- US-A1- 2003 153 330
- US-B1- 6 714 797

## Description

### BACKGROUND OF THE INVENTION

### Field of the Invention

The present invention relates to a data delivery device which delivers a file in response to a request from a mobile device to download the file.

### Related Background of the Invention

A mobile device, for example, a portable telephone of recent years, can download various application files or data files from a server, and a user of the mobile device can execute the downloaded application files, or can use the downloaded data files.

In a system where a server provides these files to the mobile device, if download requests concentrate on the server, the load of the server and network becomes high. In view of this, as described in Japanese Patent publication JP 2000-083029A, it is proposed transferring and relaying files to be delivered between terminals in order to reduce the load.

Moreover, with regard to a system to download software, Japanese Patent publication JP 11-11 0223 A describes another system. Japanese Patent publication JP 11-11 0223 A describes a software-delivery updating system wherein a personal computer can acquire and update only necessary software by communication with other devices existing on a network, and exchanging software information that each has.

The document US6714797 discloses a system, method and computer program for ordering, paying for and download digital products to a mobile device in a cost-effective manner. The mobile device includes a short range transceiver and a network transceiver. The mobile device accesses electronic shop server web sites which contain digital products for sale and hotspot network locations where these digital products may be downloaded to the mobile device via the short range transceiver.

### SUMMARY OF THE INVENTION

However, according to the system described in Japanese Patent Application Laid-open No. 2000-83024, delivery routes of files to be delivered are determined in advance within a predetermined group, and the files are delivered based on these delivery routes. Accordingly, there are problems that the delivery processing can not be carried out by unspecified number of mobile devices, and that it is time-consuming because the delivery routes need to be defined in advance. Moreover, the system described in Japanese Patent Application Laid-open No. Hei 11-110223 is intended for personal computers and printers which are fixed to arbitrary places, and when software installed in a printer is updated, a personal computer takes out this updated software from the printer and updates its own software. Consequently, communications with unspecified number of mobile devices can not be carried out like the technique described as in Japanese Patent Application Laid-open No. 2000-83024.

It is therefore an object of the present invention to provide a data delivery device for controlling a mobile device, which sends a download request, to receive files from unspecified number of other mobile devices without troubling the user of the mobile device.

In order to solve the above-described problems, a data delivery device according to the present invention includes: a receiving means for receiving a download request from a requesting mobile device which requests data to be downloaded; a retrieval means for retrieving existence of surrounding mobile devices existing within a predetermined region from the requesting mobile device with using management information including positions of the surrounding mobile devices, when the receiving means receives the download request; and a transmitting means for transmitting setting information to the requesting mobile device in order to enable the requesting mobile device to receive the data from an arbitrary one of the surrounding mobile devices.

Further, according to the present invention, a data delivery method, for a data delivery device carrying out data delivery in response to a download request from a requesting mobile device which requests data to be downloaded, includes the steps of: receiving the download request from the requesting mobile device; retrieving existence of surrounding mobile devices existing within a predetermined region from the requesting mobile device with using management information including positions of the surrounding mobile devices, upon receipt of the download request; and transmitting setting information to the requesting mobile device in order to enable the requesting mobile device to receive the data from an arbitrary one of the surrounding mobile devices.

In the above-described data delivery device according to the present invention, existence of the surrounding mobile devices is retrieved in a predetermined region from the requesting mobile device, which has sent a download request. Then, the requesting mobile device receives setting information (for example, setting information for a master in Bluetooth) which enables the requesting mobile device to receive the data to be downloaded. Therefore, the requesting mobile device, to which this setting information has been transmitted, is set in a condition that enables the necessary data to be received from the surrounding mobile devices. Further, since the data can be received from the surrounding mobile devices, the load of the data delivery device which delivers data can be reduced, and thus the traffic on the network can be reduced.

Preferably, the data delivery device according to the present invention further includes a notifying means for notifying the requesting mobile device of the telephone number of the surrounding mobile device..

In the above-described configuration according to the present invention, by notifying the requesting mobile device, which has sent a download request, of the telephone numbers of the surrounding mobile devices, it is possible to make the requesting mobile device identify the surrounding mobile devices which can deliver the necessary data among the surrounding mobile devices existing around the requesting mobile device.

Further preferably, the receiving means receives data information for identifying the data to be downloaded, the retrieval means retrieves existence of mobile devices having the data information, and the notifying means notifies the requesting mobile device of the telephone numbers of the surrounding mobile devices of which the existence is retrieved by the retrieval means.

In the above-described configuration according to the present invention, the amount of data to be informed is reduced by notifying only the information for identifying the mobile devices having the necessary data, and thus the traffic on the network can be reduced. Moreover, at the mobile device side which received a notification of the information for identifying the surrounding mobile devices, the user of the requesting mobile device can select an arbitrary mobile device out of the information for identifying the surrounding mobile devices by receiving and displaying only the information for identifying the necessary mobile devices, and thereby the user's operability can be improved.

In the present invention, existence of the surrounding mobile devices existing in a predetermined region from a mobile device, which has sent a download request, and storing a file to be downloaded are retrieved. Then, setting information (for example, setting information capable of carrying out a setting for a master in Bluetooth), which enables the requesting mobile device to receive the files, is transmitted. Therefore, in the requesting mobile device, to which the setting information has been transmitted, a setting enabling the necessary data to be received from the surrounding mobile devices is made. Accordingly, since the data can be received from the surrounding mobile devices existing in the surrounding area, the load of the data delivery device which delivers data can be reduced, and thus the traffic on the network can be reduced.

### BRIEF DESCRIPTION OF THE DRAWINGS

Fig. 1 is a system configuration view showing a network system configuration according to the present invention;

Fig. 2 is a block diagram of a data delivery device according to the present invention;

Fig. 3 is a block diagram of a location management device;

Fig. 4 is an explanatory view showing management information for managing positional information of mobile devices which the location management device stores;

Fig. 5 is a block diagram of a mobile-device management device;

Fig. 6 is an explanatory view showing management information for managing applications which mobile devices store, which has been stored in the mobile-device management device;

Fig. 7 is a block diagram of an application management device;

Fig. 8 is an explanatory view showing management information for managing check sum information on applications which the application management device stores;

Fig. 9 is a sequence diagram showing steps from a download request to communication link setting in a download process of a file using the data delivery device according to the present invention; and

Fig. 10 is a sequence diagram showing from the communication link setting to communication link disconnection in the download process of the file using the data delivery device according to the present invention.

### DESCRIPTION OF THE PREFERRED EMBODIMENTS

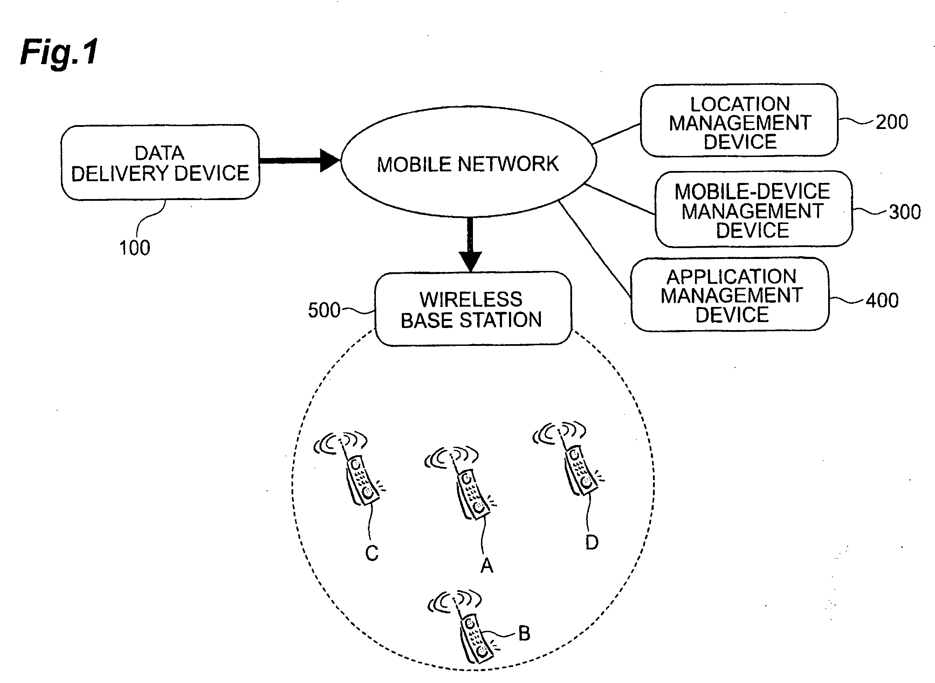

Hereafter, a data delivery device and a data delivery method according to the present invention will be described in accordance with accompanying drawings. First, a network configuration of the data delivery device and data delivery method according to the present invention will be described. Fig. 1 is a conceptual diagram of a network system in which a data delivery device 100 of the present invention is configured.

The data delivery device 100 can receive a download request from a mobile device A (hereinafter, referred as a requesting mobile device) via a mobile network (a wireless-communications network) and a wireless base station 500. In Fig. 1, after the mobile device A sent a download request to the data delivery device 100, a download processing has been carried out between the mobile device A and the data delivery device 100. Then, the mobile device A makes communication-connection with mobile devices B to D (hereinafter, referred as surrounding mobile devices) existing in the surrounding area (which is a region shown by the dotted line, by placing the mobile device A in the center), and the mobile device A carries out a receiving process of an application from one or more of these mobile devices B to D using a wireless technique based on Bluetooth. In addition, these mobile devices A to D can carry out wireless communications with each other by Bluetooth, and the mobile device A is configured so that the data delivery device 100 can carry out a setting process to make the mobile device A as a master for a Bluetooth-based network. The details thereof will be described later.

Moreover, the data delivery device 100 communicates with a location management device 200, a mobile-device management device 300 and an application management device 400. The location management device 200 manages the positions of the mobile devices A to D via the mobile network, and the mobile-device management device 300 manages file names and application IDs of applications which the mobile devices A to D possess, and the application management device 400 manages applications to be delivered. Then, the data delivery device 100 can fetch necessary information from these management devices. In addition, all of or a part of the data delivery device 100, the location management device 200, the mobile-device management device 300, and the application management device 400 can be also configured as one device.

Hereinafter, the detailed configuration of each of the data delivery device 100, the location management device 200, the mobile-device management device 300, and the application management device 400 will be described.

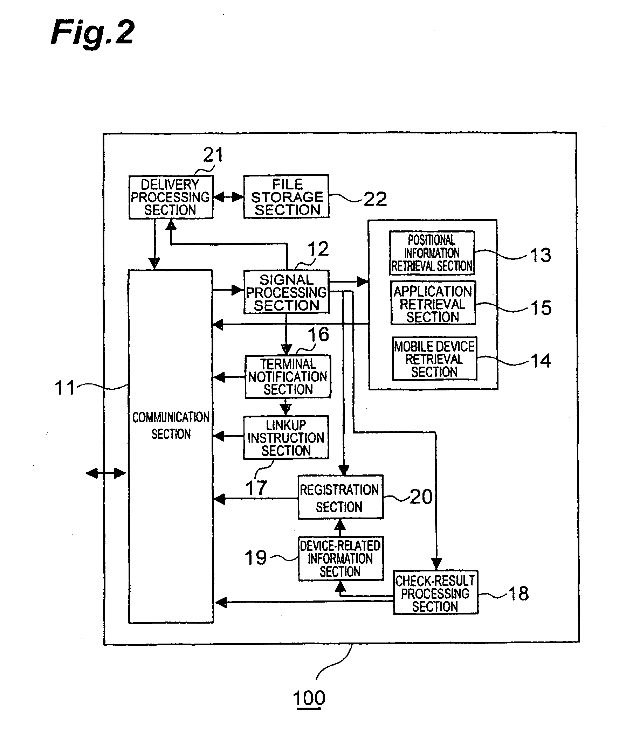

First, the detailed configuration of the data delivery device 100 will be described. Fig. 2 is a block diagram of the data delivery device 100.

The data delivery device 100 according to the present invention includes: a communication section 11 (receiving means according to the present invention), a signal processing section 12, a positional information retrieval section 13 (retrieval means according to the present invention), a mobile device retrieval section 14 (retrieval means according to the present invention), an application retrieval section 15, a terminal notification section 16 (notifying means according to the present invention), a linkup instruction section 17 (transmitting means according to the present invention), a check-result processing section 18, a device-related information section 19, a registration section 20, a delivery processing section 21, and a file storage section 22.

The communication section 11 receives instruction signals, such as a request to download an application from mobile devices (specifically, requesting mobile devices), via the network, and transmits various instruction signals and various information to the mobile devices. In addition, the communication section 11 receives, from the requesting mobile devices, information (a file name, an application ID, or the like) for identifying the application intended to be downloaded together with a request to download the application.

The signal processing section 12 analyzes a signal received via the communication section 11, and carries out the processing corresponding to the signal. Namely, when retrieving the position of the requesting mobile device, which has sent a download request, the signal processing section 12 outputs a signal for processing the request to the positional information retrieval section 13 as will be described later. Then when retrieving existence of surrounding mobile devices, which stores the application to be downloaded and exists around the requesting mobile device, the signal processing section 12 outputs a signal for processing the request to the mobile device retrieval section 14. Further, when transmitting to the requesting mobile device, a list information of the mobile devices having the application to be downloaded, the signal processing section 12 outputs a signal for processing the request to the application retrieval section 15. Then, when notifying the surrounding terminal from which the file is to be downloaded, the signal processing section 12 outputs a signal for processing the request to the terminal notification section 16. Further, when checking whether the application to be downloaded has been downloaded normally, the signal processing section 12 outputs a signal for processing the request to the check-result processing section 18. Then, when carrying out a registration processing of the mobile device having downloaded the application, the signal processing section 12 outputs a signal for processing the request to the registration section 20. Further, when carrying out a data delivery processing, the signal processing section 12 outputs a signal for the delivery-processing request to the delivery processing section 21.

The positional information retrieval section 13 accesses the location management device 200 existing on the network, and transmits a retrieval request for retrieving the position where the requesting mobile device exists on the network t. Furthermore, the positional information retrieval section 13 transmits to the location management device 200 a retrieval request for retrieving the positions of the surrounding mobile devices existing around the requesting mobile device. In the example of Fig. 1, by retrieving the position of the mobile device A that is the requesting mobile device, further, a retrieval request is transmitted so as to retrieve the positions of the mobile devices B to D (surrounding mobile devices) existing in the surrounding area.

The mobile device retrieval section 14 transmits to the mobile-device management device 300, which is arranged on the network, a signal indicative of a retrieval request regarding the mobile device (namely, the surrounding mobile devices) having the application to be downloaded. Accordingly, a target device responding to the download request is retrieved among the mobile devices that the positional information retrieval section 13 has retrieved.

When the application retrieval section 15 receives a completion signal of the download and check sum information from the mobile device, the application retrieval section 15 transmits the received check sum information to the application management device 400 in order to request the application management device 400 to check whether the application has been received normally. The check sum information is numerical information computed by the application, and the mobile device computes the check sum information upon completion of receiving the application. The application management device 400 stores normal check sum information for each application in advance so that the application management device 400 receives the check sum information and checks whether the reception of the application has been completed normally. Then, the application management device 400 judges whether or not the file has been received normally by comparing the check sum information being stored in the application management device 400 with the check sum information which was computed by the mobile device and transmitted to the data delivery device 100.

The terminal notification section 16 notifies the requesting mobile device, which has sent a download request, of the telephone numbers for identifying the mobile devices which the positional information retrieval section 13 and the mobile device retrieval section 14 have retrieved. When the positional information retrieval section 13 retrieved a plurality of mobile devices, the terminal notification section 16 notifies the requesting mobile device of the telephone numbers of the plurality of mobile devices.

The linkup instruction section 17 transmits setting information with which the requesting mobile device can receive the application from mobile devices existing around the mobile device concerned (namely, the requesting mobile device). The mobile device carries out the setting for a master in the Bluetooth-based network upon receipt of the setting information. Here, the process will be described, in which the mobile device set as a master communicates with other mobile devices by Bluetooth, thereby establishing a communication link.

The requesting mobile device, set as a master by the data delivery device 100, transmits a retrieval signal to the surrounding mobile devices (namely, the mobile devices in the surrounding area), and waits for a response from the surrounding mobile devices in the communication-available area (approximately 10 meters). Upon receipt of the response to this retrieval signal from the surrounding mobile devices, the requesting mobile device as the master recognizes the surrounding mobile devices as a slave, and the requesting mobile device issues a "Name Request" to the mobile device serving as the slave, and thereby obtain the telephone number of the mobile device serving as the slave.

The requesting mobile device set as the master compares the telephone number received from the terminal notification section 16 of the data delivery device 100 with the telephone numbers received from the surrounding mobile devices presently existing in the surrounding area. Then, if the telephone numbers received from the terminal notification section 16 agrees with the telephone numbers received from the surrounding mobile devices, the requesting mobile device set as the master recognizes the mobile devices carrying the telephone numbers as the mobile devices which can transmit the file, and the requesting mobile device establishes a communication link to the surrounding mobile devices. The user of the requesting mobile device selects an arbitrary number out of the recognized telephone numbers, and the requesting mobile device sends a request signal for requesting the application to be sent to the requesting mobile device together with information (for example, file name and application ID) for identifying the application intended to be downloaded. The surrounding mobile device serving as the slave that received the request signal transmits a response to the request to the requesting mobile device set as the master and then transmits the application. The requesting mobile device set as the master receives the application from the mobile device serving as the slave.

In the example of Fig. 1, a setting for a master is made to the mobile device A, and the mobile device A serving as the master accesses the mobile devices B to D, and carries out a setting process to serve as a slave, thereby the processing of a file transfer is enabled: The mobile device A is configured so as to enable the processing of receiving a setting for a master from the data delivery device 100 and to enable the processing of obtaining the telephone numbers of the mobile devices B to D while outputting a retrieval signal to the mobile devices B to D. Moreover, each of the mobile devices B to D is configured so as to reply its own telephone number in response to the request from the mobile device A.

Back to Fig. 2, when the signal processing section 12 judges that the download has been completed normally by receiving the check result of the check sum from the application management device 400, the check-result processing section 18 transmits a signal indicating "Check is OK." and an instruction signal to disconnect the link, to the requesting mobile device. Moreover, when having obtained a normal check result, information (the telephone number or the like) for identifying the surrounding mobile device from which the requesting mobile device has attempted to download, the file name of the downloaded application, and the application ID with which the application can be uniquely identified is registered in the device-related information section 19 (described later).

Moreover, when judging that the signal processing section 12 has received abnormality of the check result, an instruction to obtain the application again is carried out to the mobile device which has sent a download request.

The device-related information section 19 stores information (the telephone number, the serial number, or the like) for identifying the requesting mobile device which downloaded the application and completed the reception of the application normally, the file name of the downloaded application, and the application ID with which the application can be uniquely identified.

When the check result is judged as normal by the above-described check-result processing section 18, the registration section 20 registers the information for identifying the mobile device, the file name of the application, and the application ID, which have been stored in the device-related information section 19, in the mobile-device management device 300.

When the above-described signal processing section 12 judges as having received, from the mobile-device management device 300, a response that there exist no mobile devices having the same application as the one to be the target of the download, around the requesting mobile device, the delivery processing section 21 carries out the download processing of the application, which has been requested from the requesting mobile device, via the network. The application be downloaded is stored in the file storage section 22 in advance.

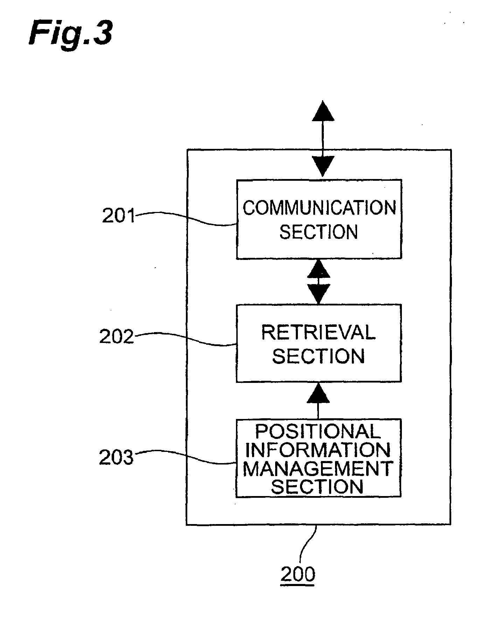

Next, the configuration of the location management device 200 will be described. Fig. 3 is a block diagram of the location management device 200.

The location management device 200 includes a communication section 201, a retrieval section 202, and a positional information management section 203.

The communication section 201 communicates with the data delivery device 100 via the network.

The retrieval section 202 retrieves the positions of mobile devices existing on the network, at the request from the data delivery device 100. The retrieved positions are based on the positional information stored in the positional information management section 203.

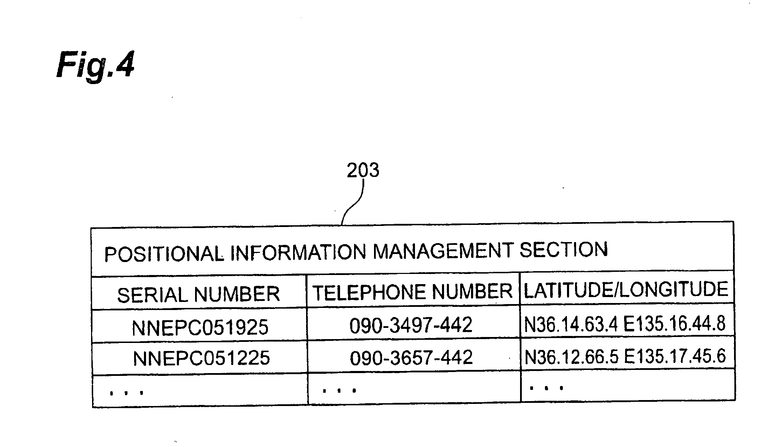

The positional information management section 203 stores the positions of mobile devices existing on the network. Information for identifying the positions of the mobile devices stored in the positional information management section 203 will be described with the accompanying drawing. Fig. 4 is a view showing a specific example of information for identifying the positions of the mobile devices which the positional information management section 203 stores.

As shown in Fig. 4, the positional information of the mobile devices is expressed with the serial number, the telephone number, and the latitude/longitude of each of mobile devices, and is stored in the positional information management section 203. The positional information being stored in the positional information management section 203 is collected from mobile devices in a constant cycle with using a GPS (global positioning system), and the positional information management section 203 stores the collected positional information of the mobile devices. In addition, the mobile device, of which the positional information is collected, has a function to inform the position by the GPS.

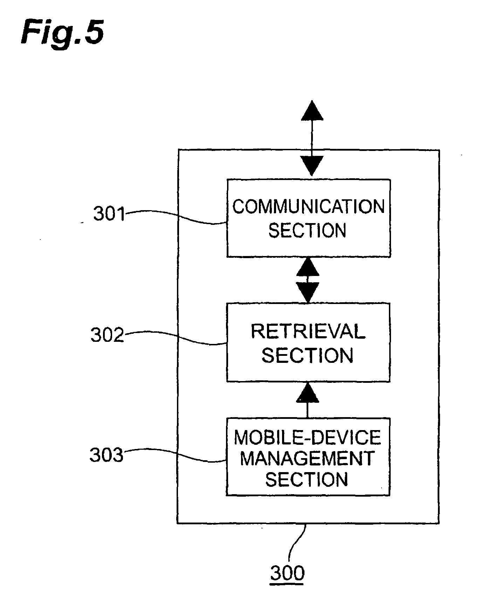

Next, the configuration of the mobile-device management device 300 will be described. Fig. 5 is a block diagram of the mobile-device management device 300.

The mobile-device management device 300 includes a communication section 301, a retrieval section 302, and a mobile-device management section 303.

The communication section 301 communicates with the data delivery device 100 via the network.

At the request from the data delivery device 100, the retrieval section 302 retrieves information for identifying the application, which the mobile device existing on the network possesses, based on the information stored in the mobile-device management section 303.

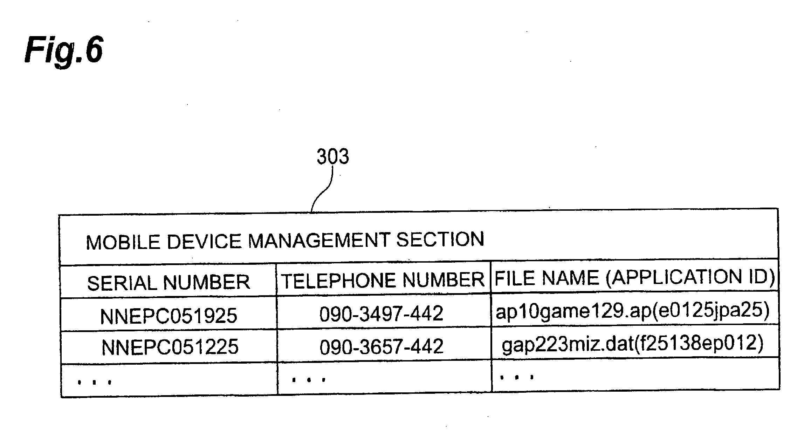

The mobile-device management section 303 stores information for identifying each of applications which the mobile devices existing on the network store. The information for identifying the applications which the mobile devices stored in the mobile-device management section 303 will be described with the accompanying drawing. Fig. 6 is a view showing a specific example of information for identifying applications which the mobile devices possess.

As shown in Fig.. 6, a file name of an application is stored as information for identifying each of the applications which the mobile devices store. Other than the above, as the information for identifying the mobile device, the serial number and the telephone number of the mobile device are stored by associating with the file name and the application ID. The information described above is collected through processes which will be described later.

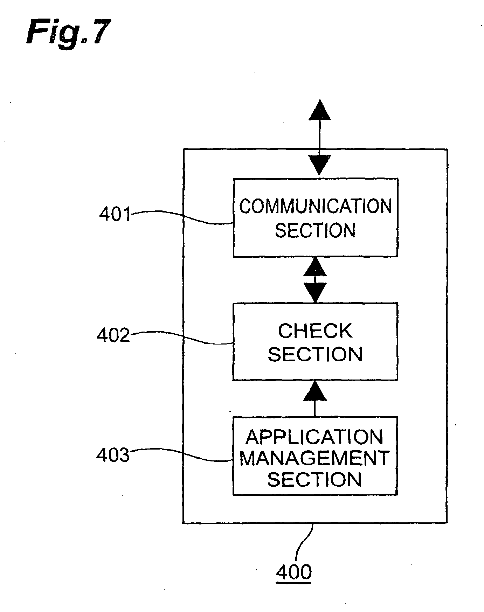

Next, the configuration of the application management device 400 will be described. Fig. 7 is a block diagram of the application management device 400.

The application management device 400 includes a communication section 401, a check section 402, and an application management section 403.

The communication section 401 communicates with the data delivery device 100 via the network.

At the request from the data delivery device 100, the check section 402 retrieves check sum information corresponding to the application based on the application management information stored in the application management section 403.

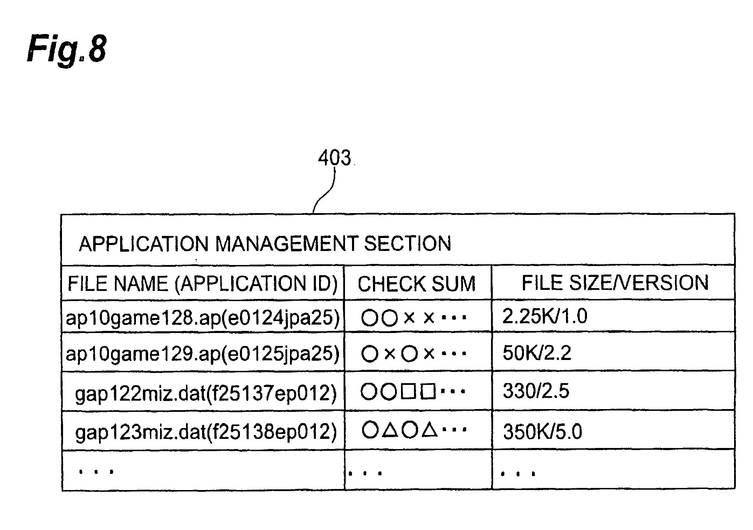

The application management section 403 stores information for identifying applications, check sum information, a file size, and version information. The information described above stored in the application management section 403 will be described with the accompanying drawing. Fig. 8 is a view showing a specific example of the information.

As shown in Fig. 8, a file name of an application and an application ID are stored as the information for identifying each of applications which the mobile devices store, and the check sum information computed when the application is stored correctly is stored together with the version information and the file size of each of the applications. The information described above is prepared and managed by the communication common carrier or the like who constructs the network.

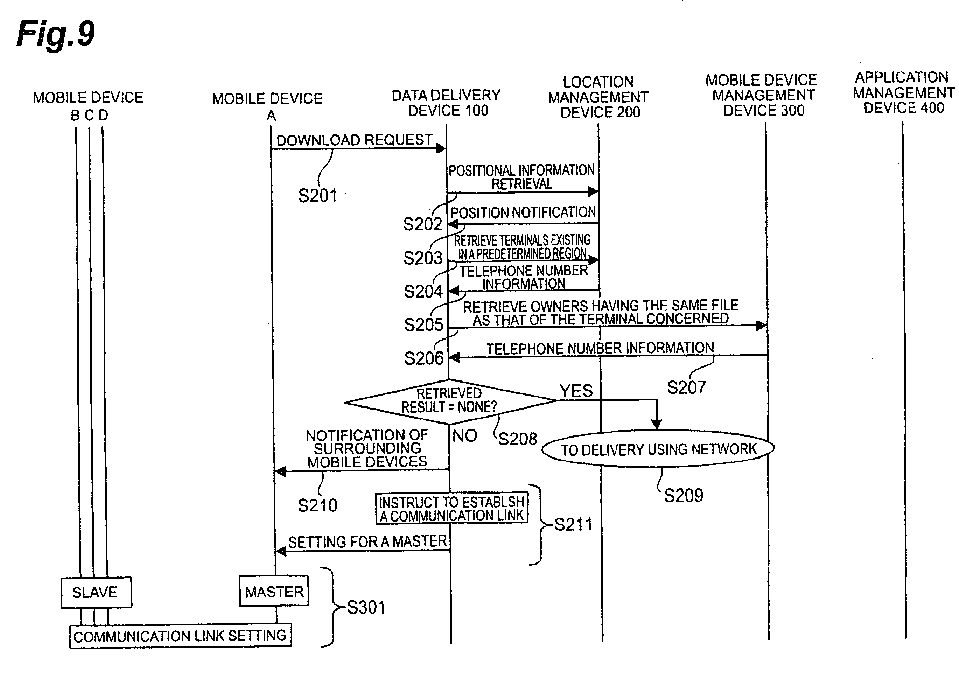

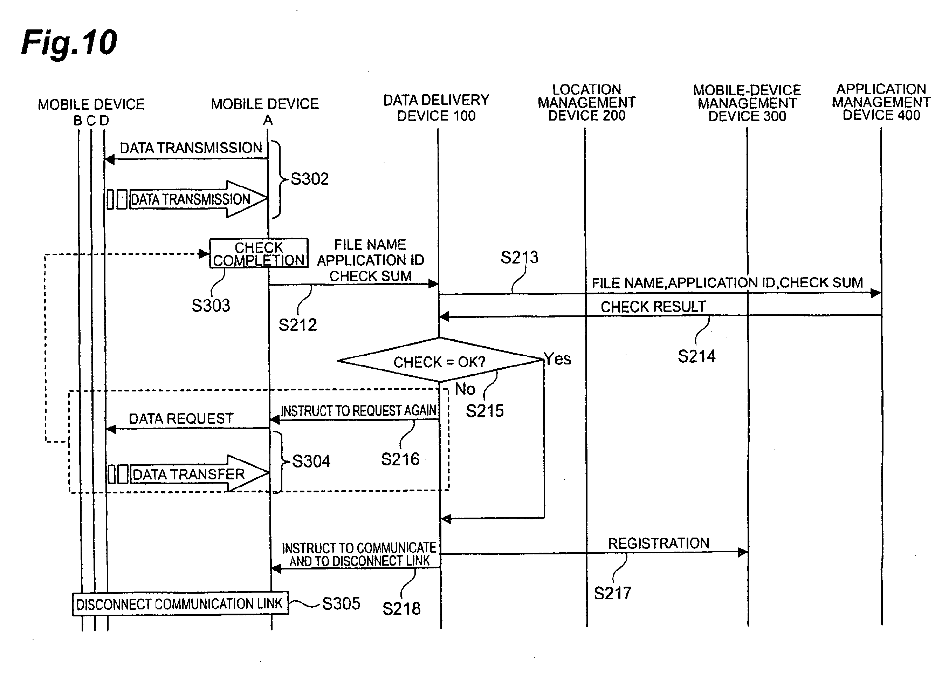

Next, delivery method of an application to a mobile device will be described. The delivery method of an application to the mobile device uses the data delivery device 100, the location management device 200, the mobile-device management device 300, and the application management device 400, which are configured as described above. Fig. 9 and Fig. 10 are sequence diagrams showing a signal processing across the data delivery device 100, the location management device 200, the mobile-device management device 300, the application management device 400, and the mobile devices A to D.

First, steps from a download request from the mobile device A (refer to Fig. 1) to the setting of a communication link between each mobile device will be described using Fig. 9.

When the data delivery device 100 receives a download request from one of the mobile devices (mobile device A) and telephone number information of the mobile device (mobile device A) (S201), the signal processing section 12 in the data delivery device 100 judges that the download request from the mobile device (the mobile device A) occurred. Then, the positional information retrieval section 13 transmits to the location management device 200 the telephone number information of the mobile device (mobile device A) which has sent a download request, in order to request the location management device 200 to retrieve the position of the mobile device (mobile device A) which has sent a download request (S202).

When the location management device 200 receives the telephone number information via the communication section 201, the retrieval section 202 identifies the positional information of the mobile device (mobile device A) with the telephone number of the mobile device (mobile device A) stored in the positional information management section 203, and transmits the positional information (latitude, longitude) of the mobile device to the data delivery device 100 via the communication section 201.

When the signal processing section 12 in the data delivery device 100 judges that the positional information from the location management device 200 is received, the signal processing section 12 notifies the reception to the positional information retrieval section 13 (S203). The positional information retrieval section 13 transmits a request signal for further requesting the location management device 200 to retrieve mobile devices existing in a predetermined region around the received positional information (S204)

In the location management device 200 which received the request signal, the retrieval section 202 retrieves existence of mobile devices in the surrounding area from the information being stored in the positional information management section 203, and extracts the retrieved telephone numbers of the mobile devices. Then, the retrieval section 202 transmits the extracted information of the telephone numbers to the data delivery device 100 via the communication section 201 In this example, the telephone numbers of the mobile devices B to D (refer to Fig. 1) are extracted and transmitted to the data delivery device 100.

When the signal processing section 12 in the data delivery device 100 judges the reception of the information indicating the telephone numbers from the location management device 200 (S205), the signal processing section 12 instructs the mobile device retrieval section 14 to extract mobile devices (the mobile devices B to D) storing the application to be downloaded among the mobile devices that have been identified by the received telephone numbers. The mobile device retrieval section 14 which has received the instruction transmits to the mobile-device management device 300 a request signal for requesting to retrieve existence of the mobile devices storing the application to be downloaded (S206).

When the mobile-device management device 300 receives this request signal via the communication section 301, the retrieval section 302 retrieves the information in the mobile-device management section 303 to extract the telephone numbers for identifying the mobile devices storing the application to be downloaded, and transmits the extracted information of the telephone numbers to the data delivery device 100 via the communication section 301. In addition, if the retrieval section 302 cannot extract the telephone number, the retrieval section 302 transmits to the data delivery device 100 a signal indicating that the telephone numbers cannot be extracted.

When the signal processing section 12 in the data delivery device 100 receives a signal from the mobile-device management device 300 (S207), the signal processing section 12 judges whether the signal indicates that the telephone numbers are extracted or the signal indicates that the telephone numbers cannot be extracted (S208).

Here, when the signal processing section 12 judges that there exist no mobile devices having the application to be downloaded around the requesting mobile device (mobile device A), which has sent a download request, the signal processing section 12 instructs the delivery processing section 21 to carry out a delivery processing using a regular network. Then, the signal processing section 12 notifies the delivery processing section 21 of the telephone number of the mobile device (mobile device A), which is the delivered party, and of the information for identifying the application to be downloaded (namely, the file name and the application ID). The delivery processing section 21 fetches the application having the file name and the application ID, which have been notified and have been stored in the file storage section 22, and carries out a delivery processing to the requesting mobile device (mobile device A) which has sent a download request (S209).

Upon completion of the delivery process by the delivery processing section 21, the telephone numbers of the requesting mobile device (mobile device A) and the information for identifying the delivered application are stored temporarily in the device-related information section 19. Then, the registration section 20 takes out the delivered telephone numbers and serial numbers of the mobile device, and the information for identifying the delivered application (for example, the file name and the application ID) from the device-related information section 19, and registers them in the application management device 400.

When the signal processing section 12 judges that the information of several telephone numbers is received in S208, the signal processing section 12 sends out to the terminal notification section 16 the information of the received telephone numbers and the telephone number of the requesting mobile device, which is the notified party and has sent a download request. The terminal notification section 16 transmits the information of the telephone numbers of the surrounding mobile devices, storing the application to be downloaded, to the requesting mobile device which has sent a download request (S210).

Subsequently, the terminal notification section 16 instructs the linkup instruction section 17 to establish a linkup, and the linkup instruction section 17 sets the requesting mobile device (mobile device A) as a master, and instructs to establish the communication link by Bluetooth to the mobile devices existing in the surrounding area (S211).

The requesting mobile device (mobile device A) and the surrounding mobile device (mobile devices B to D) existing in the surrounding area, which received the instruction to establish the communication link, carries out the setting for the communication link, which is a preparation processing thereof, so as to make a communication connection (S301).

Then, as shown in Fig. 10, the sequence diagram from the communication link setting to the communication link disconnection will be described.

After having carried out the setting of the communication link in S301, the user of the requesting mobile device (mobile device A) transmits to arbitrary mobile devices (namely, one or more of the surrounding mobile devices (mobile devices B to D)) a request signal for requesting the application and information for identifying the application by carrying out the wireless communications by Bluetooth. The arbitrary mobile device which received the request signal transmits the data of the application, which is identified by the information for identifying the' application, to the requesting mobile device (mobile device A) which has sent a download request (S302).

In the requesting mobile device (mobile device A), upon completion of receiving the data of application transmitted from the other mobile device (namely, one of the surrounding mobile devices) (S303), the requesting mobile device (mobile device A) transmits to the data delivery device 100 the file name and the application ID of the received application, and the check sum information computed from the application obtained by downloading.

When the signal processing section 12 in the data delivery device 100 judges the reception of the file name, the application ID, and the check sum information of the application which was requested to be downloaded (S212), the signal processing section 12 sends out the file name, the application ID, and the check sum information to the check-result processing section 18. Then, the check-result processing section 18 transmits the file name, the application ID, and the check sum information to the application management device 400 (S213). Note that, although in Fig. 10 only the file name and the application ID are transmitted, only the application ID may be transmitted.

In the application management device 400, the check section 402 compares the received information of the file name, the application ID, and the check sum information with the stored information of the file name, the application ID, and the check sum information (refer to Fig. 8) in the application management section 403. Further, the application management device 400 checks whether the check sum information corresponding to the received file name and application ID is the same as that of the one being stored in the application management section 403. Then, the check section 402 transmits the check result to the data delivery device 100.

When the signal processing section 12 in the data delivery device 100 judges the reception of the check result (S214), the signal processing section 12 sends the check result out to the check-result processing section 18. The check-result processing section 18 judges the received check result, and if further judging that the check result is NG and a file error due to wireless communications errors occurred, the data delivery device 100 transmits to the requesting mobile device (mobile device A)an instruction to carry out the download processing again (S216). In the requesting mobile device (mobile device A), a data request is carried out again to the surrounding mobile device, which the user arbitrarily designated, to download the data, and the data are downloaded (S304). Here, upon completion of the download, the completion process of the above-described S303 is carried out, and the check process based on the check sum information is carried out again (S212). In addition, the sending request of the file (or the download request of the data) may be carried out to the same mobile device as the mobile device of the transmitting source of the file which caused the file error, or the sending request of the file may be carried out to a mobile device different from the mobile device of the transmitting source of the file which caused the file error.

Moreover, if the signal processing section 12 judges that the check result is OK in S216, the check-result processing section 18 in the data delivery device 100 registers the telephone number and the serial number of the mobile device, which completed reception of the file, the file name and the application ID of the received application in the device-related information section 19, temporarily.

Subsequently, the registration section 20 fetches the information regarding the above-described mobile device from the device-related information section 19, and transmits the information to the device management device 300 (S217). Then, after carrying out the registration processing, the linkup section 17 notifies of having carried out the registration process, to the requesting mobile device (mobile device A) which has sent a download request, and disconnects the communication link to the mobile devices (mobile devices B to D) existing in the surrounding area by canceling the setting for the master (S218).

In the requesting mobile device (mobile device A) serving as the master, the setting for the master is canceled and the communication link with the surrounding mobile device existing in the surrounding area is disconnected (S305).

In addition, although in the present embodiment, the requesting mobile device, which has sent a download request, is to obtain the information for identifying mobile the surrounding mobile device storing the application as the target of the download through the operation shown in S204 to 207 in Fig. 9, the present invention is not restricted to this. For example, the requesting mobile device may carry out an inquiry processing of whether the application as the target of the download stored or not, individually to the surrounding mobile device existing around the requesting mobile device concerned, whereby a configuration may be made such that the requesting mobile device, which has sent a download request, searches for the mobile devices storing the application. In this case, the processing shown in S204 to 207 of Fig. 9 can be omitted.

The effects of the data delivery device and the data delivery method described above will be described. As described above, in the above-described configuration of the present invention, the retrieval means retrieves existence of the surrounding mobile device, which stores the file as the target of download; existing in the predetermined region surrounding the requesting mobile device, which has sent a download request. Then, the setting information (for example, setting information capable of setting for a master in Bluetooth) enabling the requesting mobile device to receive the file is transmitted to the requesting mobile device. Thereby, in the requesting mobile device to which the setting information is transmitted, the setting for enabling to receive a necessary file (or data) from the surrounding mobile device is carried out. Accordingly, it is possible to receive the file from the mobile devices existing in the surrounding area, thereby the load of the data delivery device which delivers files is relieved, and thus the traffic on the network can be reduced.

Furthermore, in the case where the mobile device, which requests to download, takes a connection-time based charging system from the data delivery device, the mobile device does not communicate with the data delivery device which delivers a file. Therefore, it is possible to reduce the communication fee, and to facilitate users to download large-capacity files.

Moreover, in the above-described configuration of the present invention, the amount of data to be informed is reduced by notifying the requesting mobile device of only the information for identifying the mobile devices having the necessary file, and thus the traffic on the network can be reduced. Moreover, at the mobile device side which received a notification of the information for identifying the surrounding mobile devices, a user of the requesting mobile device can select an arbitrary mobile device out of the information for identifying the surrounding mobile devices by receiving and displaying only the information for identifying the necessary mobile devices, and thereby the user's operability can be improved.

## Claims

1. A data delivery device (100) comprising:
a receiving means (11) for receiving a download request from a mobile device (A) which requests data to be downloaded,
**characterized by** further comprising:
a retrieval means (13) for retrieving information on existence of surrounding mobile devices (B, C, D) existing within a predetermined region from the requesting mobile device (A) with using management information including information on positions of the surrounding mobile devices (B, C, D), when the receiving means (11) receives the download request; and
a transmitting means (17) for transmitting setting information to the requesting mobile device (A) in order to enable the requesting mobile device (A) to receive the requested data from an arbitrary one of the surrounding mobile devices (B, C, D).

2. The data delivery device (100) according to claim 1, further comprising:
a notifying means (16) for notifying the requesting mobile device (A) of the telephone number of the surrounding mobile devices (B, C, D).

3. The data delivery device (100) according to claim 2, wherein the receiving means (11) receives data information for identifying the data to be downloaded; the retrieval means (13) retrieves information on existence of mobile devices having the data information, and the notifying means (16) notifies the requesting mobile device (A) of the telephone numbers of the surrounding mobile devices (B, C, D) of which the existence is retrieved by the retrieval means (13).

## Patentansprüche

1. Datenzustellungsvorrichtung (100), aufweisend:
eine Empfangseinrichtung (11) zum Empfangen einer Herunterladeanfrage von einem Mobilgerät (A), welches herunterzuladende Daten anfordert,
**dadurch gekennzeichnet, dass** sie weiter aufweist:
eine Ausleseeinrichtung (13), welche Information betreffend ein Vorhandensein von in der Umgebung befindlichen Mobilgeräten (B, C, D) ausliest, die innerhalb eines vorbestimmten Gebietes vom anfordernden Mobilgerät (A) vorhanden sind, und zwar unter Verwendung von Verwaltungsinformation, welche Information betreffend Positionen der in der Umgebung befindlichen Mobilgeräte (B, C, D) beinhaltet, wenn die Empfangseinrichtung (11) die Herunterladeanfrage empfängt; und
eine Sendeeinrichtung (17), welche Einstellinformation an das anfordernde Mobilgerät (A) sendet, um das anfordernde Mobilgerät (A) zu befähigen, die angeforderten Daten von einem beliebigen der in der Umgebung befindlichen Mobilgeräte (B, C, D) zu empfangen.

2. Datenzustellungsvorrichtung (100) nach Anspruch 1, weiter aufweisend:
eine Mitteilungseinrichtung (16), welche dem anfordernden Mobilgerät (A) die Telefonnummer des in der Umgebung befindlichen Mobilgerätes (B, C, D) mitteilt.

3. Datenzustellungsvorrichtung (100) nach Anspruch 2, bei der die Empfangseinrichtung (11) Dateninformation zum Identifizieren der herunterzuladenden Daten empfängt; die Ausleseeinrichtung (13) Information betreffend das Vorhandensein von Mobilgeräten ausliest, die über die Dateninformation verfügen, und die Mitteilungseinrichtung (16) dem anfordernden Mobilgerät (A) die Telefonnummern der in der Umgebung befindlichen Mobilgeräte (B, C, D) mitteilt, deren Vorhandensein durch die Ausleseeinrichtung (13) ausgelesen wurde.

## Revendications

1. Dispositif de fourniture de données (100) comprenant :
un moyen de réception (11) pour recevoir une demande de téléchargement d'un dispositif mobile (A) qui demande des donnés à télécharger,
**caractérisé en ce qu'**il comprend en outre :
un moyen de récupération (13) pour récupérer des informations sur l'existence de dispositifs mobiles environnants (B, C, D) existant dans une région prédéterminée du dispositif mobile demandeur (A) en utilisant des informations de gestion comprenant des informations sur des positions des dispositifs mobiles environnants (B, C, D), lorsque le moyen de réception (11) reçoit la demande téléchargement ; et
un moyen de transmission (17) pour transmettre des informations de réglage au dispositif mobile demandeur (A) afin de permettre au dispositif mobile demandeur (A) de recevoir les données demandées à partir d'un dispositif arbitraire parmi les dispositifs mobiles environnants (B, C, D).

2. Dispositif de fourniture de données (100) selon la revendication 1, comprenant en outre :
un moyen de notification (16) pour notifier le dispositif mobile demandeur (A) du numéro de téléphone des dispositifs mobiles environnants (B, C, D).

3. Dispositif de fourniture de données (100) selon la revendication 2, dans lequel le moyen de réception (11) reçoit des informations de données pour identifier les données à télécharger ; le moyen de récupération (13) récupère des informations sur l'existence de dispositifs mobiles ayant les informations de donnés, et le moyen de notification (16) notifie au dispositif mobile demandeur (A) les numéros de téléphone des dispositifs mobiles environnants (B, C, D) dont l'existence est récupérée par le moyen de récupération (13).
